# EUROPEAN PATENT APPLICATION

(11) **EP 4 008 732 A1**
(43) Date of publication of application: **08.06.2022**
(21) Application number: 20211077.1
(22) Date of filing: 01.12.2020
(51) Int. Cl.: C08F 2/00, C08F 2/01, C08F 210/06, B01J 8/24, B01J 19/24

(54) **PROCESS FOR THE PRODUCTION OF POLYOLEFIN COMPOSITIONS IN A MULTISTAGE PROCESS**

(71) Applicant: Borealis AG, 1020 Vienna (AT)
(72) Inventor: DAS, Shital, 06101 Porvoo (FI); ALASTALO, Kauno, 06101 Porvoo (FI); KUPAREVA, Antonia, 06101 Porvoo (FI); BRUCKBAUER, Stefan, 84489 Burghausen (DE); KORTEJÄRVI, Henrik, 06101 Porvoo (FI); ELOVAINIO, Erno, 06101 Porvoo (FI)
(74) Representative: Kador & Partner PartG mbB

(57) **Abstract**

The present invention relates to a process and apparatus for producing alpha-olefin polymers in the presence of a polymerization catalyst in a continuously operated multistage polymerisation sequence, the process comprising the steps of (a) polymerizing an alpha-olefin monomer and optionally one or more alpha-olefin co-monomers in a slurry reactor in the presence of a hydrocarbon diluent or liquid monomer in a slurry phase to obtain an alpha-olefin polymer, the slurry phase having a first concentration of solids, (b) continuously withdrawing from the slurry reactor a polymer slurry containing polymer and a fluid phase, (c) concentrating at least a part of the polymer slurry by removing a part of the fluid phase to provide a 1^{st} product stream comprising a concentrated slurry having a second solids concentration, which is higher than the first solids concentration, and a 2^{nd} product stream mainly comprising the fluid phase, (d) polymerizing said 1^{st} product stream in the presence of alpha-olefin monomers and optionally one or more alpha-olefin co-monomers in a first gas phase reactor (GPR1) arranged downstream of said slurry reactor to obtain a 1^{st} alpha-olefin product stream, (e) polymerizing a 3^{rd} product stream, withdrawn from said slurry reactor, in the presence of alpha-olefin monomers and optionally one or more alpha-olefin co-monomers in a second gas phase reactor (GPR2) to obtain a 2^{nd} alpha-olefin product stream.

## Description

### Background

The present invention relates to a process and an apparatus for the polymerization of alpha-olefin polymers in a multistage process. In particular, the present invention concerns a process and an apparatus for continuous polymerization of alpha-olefin monomers like ethylene and/or propylene and other monomers, wherein an alpha-olefin monomer is polymerised in a continuously operated multistage polymerisation sequence involving at least two gas phase reactors.

The polymerization of alpha-olefin polymers in a multistage process involving a slurry phase polymerization and one or more gas phase reactors is well known. Gas phase reactors are commonly used for the polymerization of alpha-olefins such as ethylene and propylene as they allow relative high flexibility in polymer design and the use of various catalyst systems. A common gas phase reactor variant is a fluidized bed reactor.

Such multistage processes, as developed by Borealis (known as BORSTAR^{®} technology) are described e.g. in patent literature, such as in EP 0 887 379, WO 92/12182 WO 2004/000899, WO 2004/111095, WO 99/24478, WO 99/24479 or in WO 00/68315.

Heterophasic propylene copolymers also denoted impact propylene copolymers are also well known in the art. Heterophasic propylene copolymers are composed of two phases, i.e. a highly crystalline matrix phase and an amorphous elastomer phase dispersed therein. These two phases are either mixed by in-situ blending via reactors coupled in series or by mechanical blending of two components produced separately, whereby in-situ blending is generally preferred due to the better mixing quality. In addition to that it was recognized in the art that further improved properties can be obtained by using a bimodal or trimodal matrix phase and/or a bimodal elastomer phase. When combined with desirable in-situ blending there is the need for multi reactors coupled in series. As a further separate option the use of solution polymerization with two or more reactor trains configured in parallel has been described. However, the separation, i.e. workup of the solvent and catalyst in solution polymerization introduces undesirable complexity.

WO 2013/041507 A1 discloses a process for the production of a heterophasic polypropylene whereby a triple stage sequential reactor configuration loop - gas phase reactor 1 - gas phase reactor 2 is used for the production of the matrix phase with the elastomer phase being incorporated by mechanical blending. Due to mechanical blending higher amounts of higher than 20 wt.-% can be achieved.

EP 2 586 823 A1 discloses a process for the production of a heterophasic polypropylene whereby a quadruple stage sequential reactor configuration loop - gas phase reactor 1 - gas phase reactor 2 - gas phase reactor 3 is applied with the matrix phase being produced in the first three reactors, i.e. loop - gas phase reactor 1 - gas phase reactor 2 and the elastomer phase being produced in gas phase reactor 3. Again the amount of elastomer as prepared in the final reactor is rather limited which is partially compensated by mechanical blending of small amounts of impact modifiers.

EP 2 174 980 A1 discloses a process for the production of a heterophasic polypropylene whereby a triple stage sequential reactor configuration loop - gas phase reactor 1 - gas phase reactor 2 is used with the matrix phase being produced in the loop reactor only and the elastomer phase being produced in gas phase reactors 1 and 2. However, such sequence does not provide bimodality in the matrix.

WO 2004/039847 A1 relates to a process and an apparatus for continuous polymerisation of olefin monomers in a cascade of polymerisation reactors. According to the process, an olefin monomer is polymerised first in slurry phase in an inert hydrocarbon diluent in at least one loop reactor and then, subsequently, in gas phase in at least one gas phase reactor. According to the invention, a polymer slurry is continuously withdrawn from the loop reactor and optionally concentrated. The concentrated slurry is conducted to a high pressure flash unit in order to remove the remaining fluid phase, and fed to the gas phase reactor. With this process, it is possible to produce bimodal polyethylene with good properties. The operation of the process is stable because of continuous operation conditions.

Prior art triple or quadruple stage sequential reactor configurations have certain limitations. In a first aspect a pressure decrease enabling easy transfer of the polymer intermediate powder from one reactor to the following reactor would be desirable. In a second and a more important aspect, the catalyst productivity declines over the reactors coupled in series. Addition of a second catalyst into one or more reactors following the first reactor is conceivable but usually leads to high complexity due to need for deactivation of the catalyst used in the preceding reactor. Further introduction of catalyst at the final reactor usually will increase the risk of catalyst flushing. In a third and also important aspect, the powder obtained as for example from preceding reactors displaces undesirably high volume in a subsequent reactor. In a forth and also important aspect, the dissimilarity of the individual fractions as produced in the individual reactors is somewhat limited. For example, the hydrogen feed for modifying the melt flow rate and dependent thereon the molecular weight results in certain limitations and/or additional measures to be taken such as degassing steps.

The disadvantages of existing triple or quadruple stage sequential reactor configurations lead to certain constraints in the polymerization process and insofar also in the polymer products which can be obtained.

According to the standard operating procedures and fluid flow dynamics inside the reactor, polymer slurry produced in a slurry reactor is concentrated at the lower bottom surface of the slurry reactor. Usually, the slurry is withdrawn from that surface and may further be settled in an outlet tube. Thus, the solid content in the polymer slurry is increased, based on the reactor residence time and catalyst performance. However, without additional equipment it is not possible to increase the solid concentration further. Additionally if the catalyst performance with in the reactor is not as expected, much diluted slurry is transferred to the downstream gas phase reactor. This means higher amount of unreacted monomer are transferred to the gas phase reactor. This leads to inefficient operation of recovery of monomer, resulting in higher amount to flaring (burning of monomers).

The current operation procedures therefore desire to reduce the residence time of the catalyst in the slurry reactor by flashing the slurry from loop in lower solid concentration to a 1^{st} gas phase reactor. Catalyst with lower residence time in slurry reactors will increase the productivity in gas phase reactors. Nevertheless, higher amount of unreacted monomer are entrained with the slurry phase to gas phase reactor(s) and finally to the recovery section. At higher production cycles, current design capacity of the recovery unit will not be sufficient to separate and recycle the monomer back to the reactor. This will result in high monomer loss to flare. Thus, the design capacity of current gas phase reactors and the increase in polymer throughput are still a problem in the existing polymerization systems. Moreover, it is still difficult to design a polymerization system enabling to tailor flexible polymer design at higher production rate.

Therefore, it is an object of the present invention to improve existing sequential multistage polyolefin polymerization processes and to provide a process for producing alpha-olefin polymers in the presence of a polymerization catalyst in a continuously operated multistage polymerisation sequence, where the residence time of catalyst in a slurry reactor is reduced while higher production rates, higher productivity and flexible polymer design can be achieved.

### Summary of the Invention

In order to achieve the above objects the present inventors have found a process for producing alpha-olefin polymers in the presence of a polymerization catalyst in a continuously operated multistage polymerisation sequence, comprising the steps of:
(a) polymerizing an alpha-olefin monomer and optionally one or more alpha-olefin co-monomers in a slurry reactor in the presence of a hydrocarbon diluent or liquid monomer in a slurry phase to obtain an alpha-olefin polymer, the slurry phase having a first concentration of solids,
(b) continuously withdrawing from the slurry reactor a polymer slurry containing polymer and a fluid phase, ,
(c) concentrating at least a part of the polymer slurry by removing a part of the fluid phase to provide a 1^{st} product stream comprising a concentrated slurry having a second solids concentration, which is higher than the first solids concentration, and a 2^{nd} product stream mainly comprising the fluid phase,
(d) polymerizing said 1^{st} product stream in the presence of alpha-olefin monomers and optionally one or more alpha-olefin co-monomers in a first gas phase reactor (GPR1) arranged downstream of said slurry reactor to obtain a 1^{st} alpha-olefin product stream,
(e) polymerizing a 3^{rd} product stream, withdrawn from said slurry reactor, in the presence of alpha-olefin monomers and optionally one or more alpha-olefin co-monomers in a second gas phase reactor (GPR2) to obtain a 2^{nd} alpha-olefin product stream.

In the process according to the invention, said 3^{rd} product stream may preferably comprise a concentrated slurry having a solids concentration lower than the second solids concentration of said 1^{st} product stream.

The above process may preferably further comprise the steps of:
(d') splitting the 1^{st} product stream withdrawn from the slurry reactor into a first secondary product stream (2a) and a second secondary product stream (2b), wherein the 1^{st} product stream comprises said concentrated slurry,
(e') polymerizing said first secondary product stream (2a) in the presence of alpha-olefin monomers and optionally one or more alpha-olefin co-monomers in said first gas phase reactor (GPR1) arranged downstream of said slurry reactor to obtain said 1^{st} alpha-olefin product stream, and
(f) polymerizing said second secondary product stream (2b) in the presence of alpha-olefin monomers and optionally one or more alpha-olefin co-monomers in said second gas phase reactor (GPR2) arranged downstream of said slurry reactor, and arranged in parallel to the first gas phase reactor (GPR1), to obtain said 2^{nd} alpha-olefin product stream.

Preferably, in the above process according to the present invention step (c) is conducted in a hydrocyclone. Thus, the slurry may be concentrated to provide an underflow, which comprises the concentrated slurry, and an overflow, which is rich in hydrocarbon(s). The overflow may preferably be recycled to the slurry reactor. According to a preferred mode of the above process, the 1^{st} product stream comprising the concentrated slurry is withdrawn from the slurry reactor via a separation vessel, preferably via a hydrocyclone, whereby the concentration of solids at the outlet is higher than the concentration of solids in the slurry reactor.

According to a preferred embodiment of the above process of the present invention, the 1^{st} alpha-olefin product stream obtained in the above step (d) or step (e') and the 2^{nd} alpha-olefin product stream obtained in the above step (e) or step (f) may be combined.

In order to achieve the above objects the present inventors have further found a polymerization system according to the invention for producing alpha-olefin polymers in the presence of a polymerization catalyst in a continuously operated multistage polymerisation sequence, comprising:
(A) a slurry reactor for polymerizing an alpha-olefin monomer and optionally one or more alpha-olefin co-monomers in the presence of a hydrocarbon diluent or liquid monomer in a slurry phase to obtain an alpha-olefin polymer, the slurry phase having a first solids concentration, the slurry reactor having at least one outlet allowing continuous withdrawal of a polymer slurry,
(B) a separation vessel for concentrating at least a part of the polymer slurry withdrawn from the slurry reactor by removing a part of the fluid phase to provide a 1^{st} product stream comprising a concentrated slurry having a second solids concentration, which is higher than the first solids concentration, and a 2^{nd} product stream mainly comprising the fluid phase, ,
(C) a first gas phase reactor (GPR1) arranged downstream of the slurry reactor for polymerizing the 1^{st} product stream in the presence of alpha-olefin monomers and optionally one or more alpha-olefin co-monomers, thus obtaining a 1^{st} alpha-olefin product stream exiting said first gas phase reactor (GPR1), and
(D) a second gas phase reactor (GPR2) arranged downstream of the slurry reactor and arranged in parallel to the first gas phase reactor (GPR1) for polymerizing a 3^{rd} product stream, withdrawn from the slurry reactor and comprising a concentrated slurry, in the presence of alpha-olefin monomers and optionally one or more alpha-olefin co-monomers, thus obtaining a 2^{nd} alpha-olefin product stream exiting said second gas phase reactor (GPR2).

The polymerization system according to the invention may further comprise:
(G) respective transfer lines for splitting the 1^{st} product stream withdrawn from the slurry reactor into a first secondary product stream (2a) and a second secondary product stream (2b), wherein the 1^{st} product stream comprises said concentrated slurry, wherein said first secondary product stream (2a) is polymerized in the presence of alpha-olefin monomers and optionally one or more alpha-olefin co-monomers in said first gas phase reactor (GPR1), arranged downstream of said slurry reactor to obtain said 1^{st} alpha-olefin product stream, and
said second secondary product stream (2b) is polymerized in the presence of alpha-olefin monomers and optionally one or more alpha-olefin co-monomers in said second gas phase reactor (GPR2) arranged downstream of said slurry reactor, and arranged in parallel to the first gas phase reactor (GPR1) to obtain said 2^{nd} alpha-olefin product stream.

The process and system of the present invention provide important advantages. Thus, it is possible to produce multimodal alpha-olefin polymer compositions, preferably heterophasic or random polypropylene composition with advanced properties. There is no harmful carryover of reactants from the first polymerisation stage to the second and/or third polymerisation stage. Expensive overdesign of process elements can be avoided. The operation of the process is stable because of continuous operation. The time of transitions and start-up can be reduced. An increase in polymer throughput (production rate) can be achieved and monomer loss can be reduced. Moreover, operating two gas phase reactors in parallel allows to produce two different polymer in each reactor simultaneously. By combining these two independent streams in a subsequent extrusion step unique products with tailored product properties may be produced.

### Brief Description of the Figures

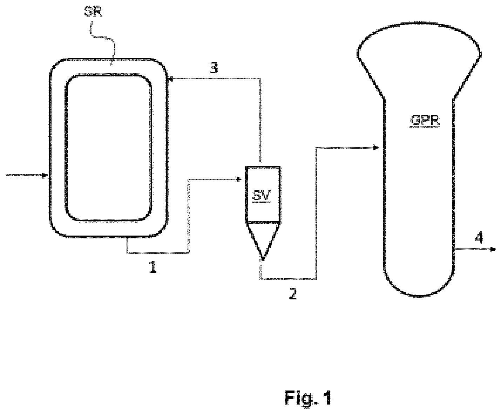

Fig. 1 is a schematic drawing of a reactor configuration of the prior art.
Fig. 2 is a schematic drawing of a reactor configuration according to a first embodiment of the present invention.
Fig. 3 is a schematic drawing of a reactor configuration according to a second embodiment of the present invention.

### Detailed Description of the invention

An alpha-olefin homo-or copolymer may be produced in a continuously operated multistage polymerization process comprising at least two gas phase reactors (GPR1) and (GPR2). The polymerization apparatus may preferably comprise a pre-polymerization reactor (PR), a first polymerization reactor (R1) and a second polymerization reactor (R2), a third polymerization reactor (R3) and optionally a fourth polymerization reactor (R4). The term "polymerization reactor" shall indicate that the main polymerization takes place.

At least two polymerization reactors are gas phase reactors (GPR). More preferably, the second polymerization reactor (R2), the third polymerization reactor (R3) and the optional fourth polymerization reactor (R4) are gas phase reactors (GPRs), i.e. a first gas phase reactor (GPR1) and a second gas phase reactor (GPR2) and a optionally a third gas phase reactor (GPR3). A gas phase reactor (GPR) according to this invention is preferably a fluidized bed reactor, a fast fluidized bed reactor or a settled bed reactor or any combination thereof.

The polymerization in the gas phase reactors is preceded by a slurry polymerization in a slurry reactor, preferably a loop reactor. In the slurry reactor (SR) an alpha-olefin monomer and optionally one or more alpha-olefin co-monomers is produced in the presence of a hydrocarbon diluent or liquid monomer in a slurry phase to obtain an alpha-olefin polymer. The slurry phase has a first concentration of solids.

Accordingly, the slurry reactor (SR) may be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

It is preferred that the operating temperature in the first polymerization reactor (R1) is in the range of 62 to 85°C, more preferably in the range of 65 to 82°C, still more preferably in the range of 67 to 80°C.

In the slurry reactor, alpha-olefin monomers, preferably propylene may be homopolymerised or copolymerised with at least one C₂ and C₄ to C₁₀ alpha-olefin. The polymerisation takes place in an inert hydrocarbon diluent or liquid monomer, preferably a C₃ to C₅ hydrocarbon diluent, more preferably in propane or isobutane diluent.

Suitable catalysts that can be used to polymerize the alpha-olefin monomers are, e.g., Ziegler-Natta catalysts, single-site catalysts, multi-site catalysts containing one or more single-site catalyst components, or combinations or mixtures of these.

The alpha-olefin polymer is continuously withdrawn from the slurry reactor in a polymer slurry containing polymer and a fluid phase, further containing hydrocarbons and optionally hydrogen. The term "alpha-olefin polymer is continuously withdrawn from the slurry reactor" encompasses the alternative of withdrawing a polymer slurry with or without a concentration step before introducing said slurry to any further downstream polymerization reactor.

At least a part of the polymer slurry may preferably be concentrated by removing a part of the fluid phase to provide a 1^{st} product stream and a 2^{nd} product stream mainly comprising the fluid phase. The 1^{st} product stream comprises a concentrated slurry. The concentrated slurry has a (second) solids concentration, which is higher than the (first) solids concentration of the slurry phase circulating in the slurry reactor. The concentration step for concentrating at least a part of the polymer slurry withdrawn from the slurry reactor may be conducted in a separation vessel, preferably a hydrocyclone.

The concentration step is preferably conducted in a hydrocyclone. Hydrocyclones are known and described e.g. in WO 2004/039847 A1. A hydrocyclone typically produces two mass streams: one on the bottom (*underflow*) and one at the top (*overflow*)*.* The underflow is generally the denser or coarser fraction having a higher solids concentration than the overflow, while the overflow mainly comprises the fluid phase including the major part of the hydrocarbons. Stable operating conditions of the hydrocyclone may be reached by recycling a part of the slurry from the bottom (underflow) of the hydrocyclone to the slurry reactor. By use of such a concentration step, the solid concentration in the concentrated slurry may be increased up to 55 wt.%, preferably 60 wt.%, more preferably up to 65 wt.%, based on the total mass of the slurry.

The 1^{st} product stream comprising said concentrated slurry is introduced into a first gas phase reactor (GPR1), arranged downstream of said slurry reactor. The 1^{st} product stream comprising the major part of the alpha-olefin polymer produced in the slurry reactor is polymerized in the presence of alpha-olefin monomers and optionally one or more alpha-olefin co-monomers and optionally hydrogen in said first gas phase reactor (GPR1) to obtain a 1^{st} alpha-olefin product stream.

In the GPR1 the following conditions are preferably adjusted:

| GPR1 | |
|---|---|
| Temperature, °C | 70-95 |
| Pressure, barg | 18-24 |
| Monomer | Propylene |
| Comonomers | Ethylene |
| Split % | 40-60 |

The above conditions may be varied as occasion demands. Specifically, not only propylene may be polymerized but other alpha-olefins such as ethylene, 1-butene, 1-hexene or 1-octene may be produced. As the comonomers, not only ethylene, may be copolymerized but other alpha-olefins such as propylene, 1-butene, 1-hexene or 1-octene may be used.

A 3^{rd} product stream circulating in the slurry reactor and comprising a concentrated slurry, may be introduced into a second gas phase reactor (GPR2) arranged downstream of said slurry reactor and arranged in parallel to the first gas phase reactor (GPR1). In a preferred embodiment of the present invention, the solids concentration in the 1^{st} product stream is the same or higher than the solid concentration in the 3^{rd} product stream.

The 3^{rd} product stream may be polymerized in the presence of alpha-olefin monomers and optionally one or more alpha-olefin co-monomers and optionally hydrogen in said second gas phase reactor (GPR2) to obtain a 2^{nd} alpha-olefin product stream.

In the GPR2 the following conditions are preferably adjusted:

| GPR2 | |
|---|---|
| Temperature, °C | 70-85 |
| Pressure, barg | 13-22 |
| Monomer | Propylene |
| Comonomers | Ethylene |
| Split % | 10-25 |

The above conditions may be varied as occasion demands. Specifically, not only propylene may be polymerized but other alpha-olefins such as ethylene, 1-butene, 1-hexene or 1-octene may be produced. As the comonomers, not only ethylene, may be copolymerized but other alpha-olefins such as propylene, 1-butene, 1-hexene or 1-octene may be used

According to the present invention the process may preferably be conducted in that the 1^{st} product stream obtained after step (c) and withdrawn from the slurry reactor is split into two product streams, i.e. a first secondary product stream (2a) and a second secondary product stream (2b).

The weight ratio of the streams (2a):(2b), i.e. weight ratio of the first secondary product stream to the second secondary product stream, may preferably controlled in a range of from 15:85 to 85:15 via flow control valve on the outlet stream.

In this embodiment of the present invention, the first secondary product stream (2a) may be introduced into said first gas phase reactor (GPR1), arranged downstream of said slurry reactor and said second secondary product stream (2b) is polymerized in the presence of alpha-olefin monomers and optionally one or more alpha-olefin co-monomers in said first gas phase reactor (GPR1) to obtain a 1^{st} alpha-olefin product stream.

| GPR1 | |
|---|---|
| Temperature, °C | 70-95 |
| Pressure, barg | 18-24 |
| Monomer | Propylene |
| Comonomers | Ethylene |
| Split % | 40-60 |

Preferably, the above conditions described for GPR1 may be applied for the polymerization of the first secondary product stream (2a) in GPR1 as well. On the other hand, the second secondary product stream (2b) may be introduced into said second gas phase reactor (GPR2), arranged downstream of said slurry reactor, and arranged in parallel to the first gas phase reactor (GPR1). Subsequently said second secondary product stream (2b) is polymerized in the presence of alpha-olefin monomers and optionally one or more alpha-olefin co-monomers in said second gas phase reactor (GPR2) to obtain a 2^{nd} alpha-olefin product stream.

| GPR1 | |
|---|---|
| Temperature, °C | 70-95 |
| Pressure, barg | 18-24 |
| Monomer | Propylene |
| Comonomers | Ethylene |
| Split % | 40-60 |

Preferably, the above conditions described for GPR2 may be applied for the polymerization of second secondary product stream (2b) in GPR2 as well.

Alternatively or additionally to the previous paragraph it is preferred that the operating temperature in the second polymerization reactor (GPR1) and in the third reactor (GPR2) and the optional the fourth reactor (preferably GPR3) is in the range of 70 to 95°C, more preferably in the range of 75 to 85°C.

In a preferred embodiment of the present invention, the solids concentration of the first secondary product stream (2a) is higher than the solids concentration of the second secondary product stream (2b). This can e.g. be achieved in a concentration step by removing a part of the fluid phase to provide a concentrated first secondary product stream (2a) and a 5^{th} product stream mainly comprising the fluid phase. The 5^{th} product stream may be recycled to the slurry reactor.

Preferably, the 1^{st} alpha-olefin product stream obtained in the above step (d) or step (e') and the 2^{nd} alpha-olefin product stream obtained in the above step (e) or step (f) may be combined. This is particularly preferred in the production of multimodal polymers enabling single line downstream treatment. Equipment and production costs can be decreased considerably.

The above-described process may include blending processes such as mechanical blending, including mixing and melt blending processes and any combinations thereof as well as in-situ blending during the polymerization process. These can be carried out by methods known to the skilled person.

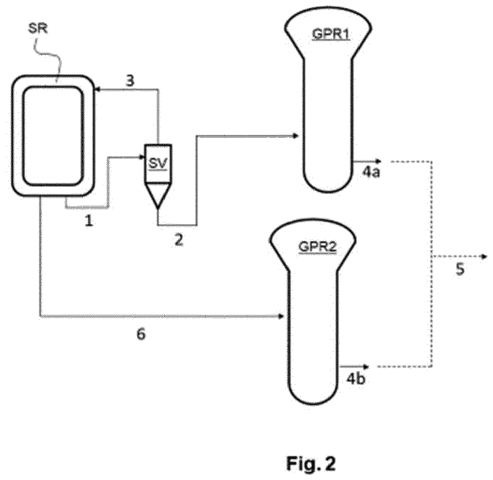

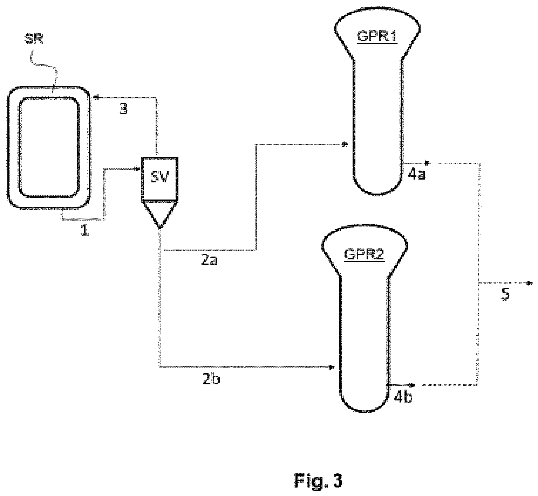

The process of the present invention may be conducted in a polymerization system as defined in claim 11 . Preferred embodiments are defined in claim 12 and claim 13. These embodiments are illustrated in Fig. 2 and 3, respectively. Theses polymerization systems are adapted to carry out the processes of the present invention as described above.

The polymerization system according to the present invention may preferably further comprise respective transfer lines combining said 1^{st} alpha-olefin product stream exiting said first phase reactor and said 2^{nd} alpha-olefin product stream exiting said 2^{nd} gas phase reactor.

The polymerization system according to the present invention may preferably further comprise respective transfer lines splitting said 1^{st} product stream withdrawn from the slurry reactor into a first secondary product stream (2a) and a second secondary product stream (2b), wherein the 1^{st} product stream comprises said concentrated slurry, wherein said first secondary product stream (2a) is introduced into said first gas phase reactor (GPR1) and said second secondary product stream (2b) is introduced into said second gas phase reactor (GPR2).

The polymerization system may preferably further comprise a flash unit (not shown in the figures) provided downstream of the slurry reactor and upstream of said first and second gas phase reactors for removing from said 1^{st} product stream essentially all of the remaining fluid phase and to provide a 4^{th} product stream containing a suspension of polymer solids and gases which is transferred to at least one of said first and second gas phase reactors.

A flash unit typically consists of a heated flash pipe and a receiving vessel. The slurry entering the flash unit may preferably have a solids concentration of 30 to 60 % by volume. In the flash unit, the remaining hydrocarbons are removed from the polymer. The flash pipe is preferably heated, e.g. by steam or water. If water is used for heating, the heating water can be advantageously taken from the jacket of the slurry reactor. The temperature is selected according to the composition of the hydrocarbon fluid so that the fluid is essentially evaporated. The phrase "essentially removing the fluid phase" means that a major fraction of the fluid phase is removed and only an amount of fluid that fills the volume between the polymer particles and the volume of pores in the polymer particles remains with the polymer. Typically, the temperature at the receiving vessel may be from 50 to 100 °C, preferably from 60 to 90 °C, in particular from 70 to 90 °C, and the pressure is preferably from 10 to 30 bar, more preferably from 12 to 27 bar, and in particular from 14 to 24 bar. The pressure is preferably higher than the pressure in the gas phase reactors, to allow smooth transfer of the polymer into the gas phase reactors. Advantageously, the pressure is at least 0.05 bar higher than in the gas phase reactors. At least a part of the overhead flow from the receiving vessel of the flash unit is passed to the recovery system for recycling into at least one of the slurry reactor and the gas phase reactors.

Before introduction into the gas phase reactors, the product flow from the flash receiving vessel can be passed through a gas exchange zone (not shown in the figures), where it is flushed countercurrently with essentially hydrogen free gas fraction from the diluent recovery or with a pure hydrocarbon, preferably propane, to reduce the amount of hydrogen carryover to the gas phase reactor. A gas exchange zone may be designed as described in WO 2004/039847.

### Experimental Part

In all reactor configurations, the following components were used.

### Reactor configuration 1 (comparative)

A loop - gas phase (GPR) reactor configuration was employed with both reactors coupled in series. A part of the slurry circulating in the first slurry (loop) reactor (SR) was introduced as a slurry stream (1) into a separation vessel (SV) such as a hydrocyclone to concentrate the solid content of the slurry fraction and a concentrated slurry (2) was then introduced as a product stream (underflow) into a downstream gas phase reactor (GPR). The overflow stream (3) exiting the hydrocyclone containing a lower solid concentration than the concentrated underflow and being rich in hydrocarbon(s) was recycled to the slurry (loop) reactor (SR). A product stream (4) exits the gas phase reactor (GPR) for further processing and end use.

In particular, the polymerisation was carried out first in a loop reactor at 70 °C and at 55 barg pressure. Liquefied propylene, working as a solvent and monomer, was continuously fed to the reactor. A pre-polymerized Ziegler-Natta catalyst was fed to the loop reactor. Ethylene was added to the reactor as a co-monomer. The polymer produced in the loop reactor was withdrawn from the loop reactor as a slurry with solid concentration of ∼32 wt.% and fed to a hydrocyclone. The bottom flow of the hydrocyclone was concentrated to ∼44 wt% and transferred to a fluidised bed gas phase reactor (GPR) arranged downstream of the loop reactor. The top flow of the hydrocyclone was returned to the loop reactor. The polymerization was further carried out in the gas phase reactor (GPR), fresh gaseous propylene, ethylene and hydrogen were fed to the reactor to attain the targeted polymer properties. The operating conditions of the GPR were ∼ 85 °C and ∼21 barg. The production rate ratio between the loop and the gas phase reactor (split) was controlled to meet the targeted product properties in the final polymer. Unreacted monomer and comonomers gases were recovered from the product tank. The gas stream was filtered, compressed and passed through a recovery system and circulated back to the reactors. The polymer powder from the product tank was transferred to the degassing unit and further to pelletization.

### Reactor configuration 2 (Inventive Example 1)

A loop reactor - gas phase (GPR1) - gas phase (GPR2) reactor configuration was employed, whereby reactors GPR1 and GPR2 were configured in parallel and downstream of the loop reactor as described herein. A separation vessel (SV) such as a hydrocyclone was used in the same manner as described for reactor configuration 1, whereby the concentrated slurry (2) obtained from the underflow of the hydrocyclone was introduced into an inlet of GPR1 and a slurry (6) circulating in the loop reactor (SR) having a solid concentration lower than the solid concentration of the concentrated slurry (2), was introduced into an inlet of GPR2. In each of GPR1 and GPR2 a polypropylene product (4a, 4b) was produced under the conditions indicated below.

In particular, the polymerisation was first carried out in a loop reactor at 70 °C and at ∼55 barg pressure. Liquefied propylene, working as a solvent and monomer, was continuously fed to the reactor. A pre-polymerized Ziegler-Natta catalyst was fed to the loop reactor. Ethylene was added to the reactor as a co-monomer. The polymer produced in the loop reactor was withdrawn from the loop reactor as a slurry with solid concentration of ∼32 wt% and fed to a hydrocyclone. The bottom flow of the hydrocyclone was concentrated to ∼44 wt% and transferred to a fluidised bed gas phase reactor (GPR1) arranged downstream of the loop reactor. The top flow of the hydrocyclone was returned to the loop reactor. Simultaneously, another slurry stream was withdrawn from the bottom of the loop reactor and directly transferred to the 2^{nd} fluidized bed reactor (GPR2) arranged in parallel to GPR1 and downstream of the loop reactor. The solid concentration in this slurry stream was ∼38 wt%, due to settling behaviour at the outlet valve. The polymerization was further carried out in the gas phase reactors (GPR1 and GPR2) arranged in parallel and downstream of the slurry reactor. Simultaneously, fresh gaseous propylene, ethylene and hydrogen were fed to both of the gas phase reactors to attain the targeted polymer properties. The operating conditions of the GPR1 and GPR2 were ∼ 85 °C and ∼21 barg. The production rate ratios between the loop and the gas phase reactors (split) were controlled to meet the targeted product properties in the final polymer. Unreacted monomer and comonomers gases were recovered from the product tank. The gas stream was filtered, compressed and passed through a recovery system and circulated back to the reactors. The polymer powder from the product tank was transferred to the degassing unit and further to pelletization.

Optionally both product streams (4a, 4b) may be combined to a combined product stream (5). However, this is not mandatory.

### Reactor configuration 3 (Inventive Example 2)

A loop reactor - gas phase (GPR1) - gas phase (GPR2) reactor configuration was employed, whereby reactors GPR1 and GPR2 were configured in parallel and downstream of the loop reactor as described herein. A separation vessel (SV) such as a hydrocyclone was used in the same manner as described for reactor configuration 1, whereby the concentrated slurry obtained from the underflow of the hydrocyclone was split into two product stream (2a) and (2b), and product stream (2a) was introduced into an inlet of GPR1, whereas product stream (2b) was introduced into an inlet of GPR2. In each of GPR1 and GPR2 a polypropylene product (4a, 4b) was produced under the conditions indicated below.

The polymerisation was first carried out in a loop reactor at 70 °C and at ∼55 barg pressure. Liquefied propylene, working as a solvent and monomer, was continuously fed to the reactor. A pre-polymerized Ziegler-Natta catalyst was fed to the loop reactor. Ethylene was added to the reactor as a co-monomer. The polymer produced in the loop reactor was withdrawn from the loop reactor as a slurry with solid concentration of -38 wt% and fed to a hydrocyclone. The bottom flow of the hydrocyclone was concentrated to ∼44 wt% and divided into two steams in a ratio of 50:50. One part was transferred to the 1^{st} fluidised bed gas phase reactor (GPR1) arranged downstream of the loop reactor and the other part was transferred to the 2^{nd} fluidized bed gas phase reactor (GPR2) arranged in parallel to GPR1 and downstream of the loop reactor. The top flow of the hydrocyclone was returned to the loop reactor. The polymerization was further carried out in the gas phase reactors (GPR1 and GPR2). Fresh gaseous propylene, ethylene and hydrogen were simultaneously fed to both gas phase reactors to attain the targeted polymer properties. The operating conditions of GPR1 and GPR2 were ∼ 85 °C and ∼21 barg. The production rate ratios between the loop and the gas phase reactors (split) were controlled to meet the targeted product properties in the final polymer. Unreacted monomer and comonomers gases were recovered from the product tank. The gas stream was filtered, compressed and passed through a recovery system and circulated back to the reactors.

The polymer powder from the product tank was transferred to the degassing unit and further to pelletization.

Optionally both product streams (4a, 4b) may be combined to a combined product stream (5). However, this is not mandatory.

The results are shown in the Table provided below.

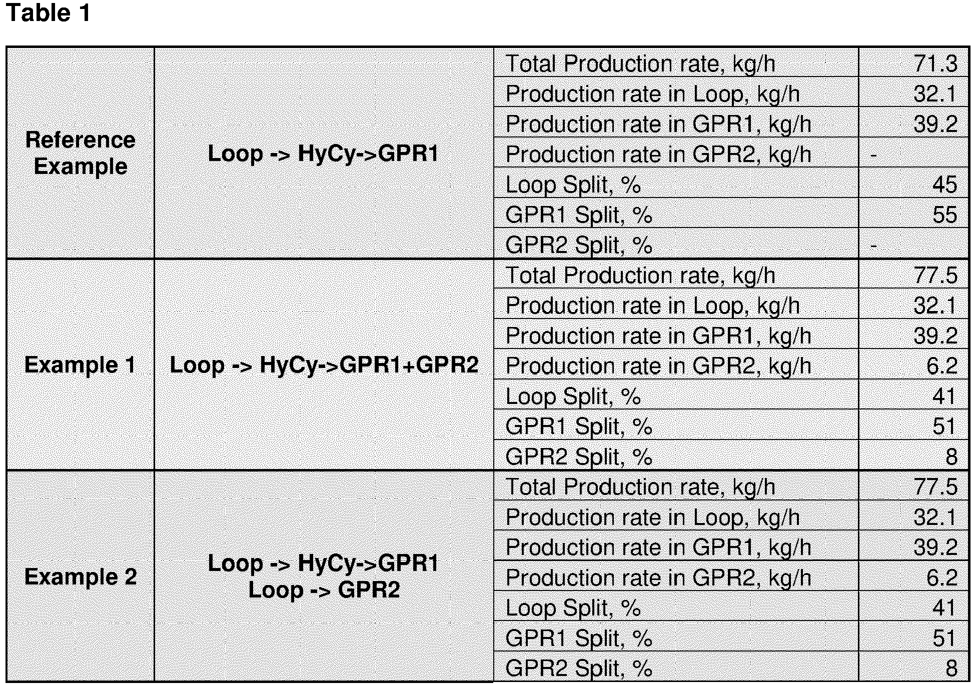

It can be seen by the above examples that the inventive process achieves higher production rates which are partly due to less carry-over of reactants to the GPR's. I Example 1 produced additional polymer due to the parallel arrangement of GPR2 and thus substantially increased the total production rate of polymer. The carry-over of reactants to the gas phase reactors could be reduced as slurry streams with higher concentrations (44 wt.%/38 wt.% solid concentration) were fed to the gas phase reactors.

The same advantages are evident from Example 2, compared to the Comparative Example. Still further, Example 2 had the additional effect over Example 1 in that the concentrated slurry stream obtained at the bottom flow of the hydrocyclone (44 wt.% solid concentration) was split into two secondary streams which were fed in parallel to the gas phase reactors GPR1 and GPR2. Thus, the carry-over of reactants to the gas phase reactors could be reduced even more.

## Claims

1. A process for producing alpha-olefin polymers in the presence of a polymerization catalyst in a continuously operated multistage polymerisation sequence, comprising the steps of:
(a) polymerizing an alpha-olefin monomer and optionally one or more alpha-olefin co-monomers in a slurry reactor in the presence of a hydrocarbon diluent or liquid monomer in a slurry phase to obtain an alpha-olefin polymer, the slurry phase having a first concentration of solids,
(b) continuously withdrawing from the slurry reactor a polymer slurry containing polymer and a fluid phase,
(c) concentrating at least a part of the polymer slurry by removing a part of the fluid phase to provide a 1^{st} product stream comprising a concentrated slurry having a second solids concentration, which is higher than the first solids concentration, and a 2^{nd} product stream mainly comprising the fluid phase,
(d) polymerizing said 1^{st} product stream in the presence of alpha-olefin monomers and optionally one or more alpha-olefin co-monomers in a first gas phase reactor (GPR1) arranged downstream of said slurry reactor to obtain a 1^{st} alpha-olefin product stream,
(e) polymerizing a 3^{rd} product stream, withdrawn from said slurry reactor, in the presence of alpha-olefin monomers and optionally one or more alpha-olefin co-monomers in a second gas phase reactor (GPR2) to obtain a 2^{nd} alpha-olefin product stream.

2. The process according to claim 1, wherein said 3^{rd} product stream comprises a concentrated slurry having a solids concentration lower than the second solids concentration of said 1^{st} product stream.

3. The process according to claim 1, further comprising the steps of:
(d') splitting the 1^{st} product stream withdrawn from the slurry reactor into a first secondary product stream (2a) and a second secondary product stream (2b), wherein the 1^{st} product stream comprises said concentrated slurry,
(e') polymerizing said first secondary product stream (2a) in the presence of alpha-olefin monomers and optionally one or more alpha-olefin co-monomers in said first gas phase reactor (GPR1) arranged downstream of said slurry reactor to obtain said 1^{st} alpha-olefin product stream, and
(f) polymerizing said second secondary product stream (2b) in the presence of alpha-olefin monomers and optionally one or more alpha-olefin co-monomers in said second gas phase reactor (GPR2) arranged downstream of said slurry reactor, and arranged in parallel to the first gas phase reactor (GPR1), to obtain said 2^{nd} alpha-olefin product stream.

4. The process according to any one of claims 1 to 3, wherein step (c) is conducted in a hydrocyclone.

5. The process according to claim 4, wherein the polymer slurry is concentrated to provide an underflow, which comprises the concentrated slurry, and an overflow, which is rich in hydrocarbon(s).

6. The process according to claim 5, wherein the overflow is recycled to the slurry reactor.

7. The process according to any one of the preceding claims, wherein the 1^{st} alpha-olefin product stream obtained in step (d) of claim 1 or step (e') of claim 3 and the 2^{nd} alpha-olefin product stream obtained in step (e) of claim 1 or step (f) of claim 3 are combined.

8. The process according to any one of the preceding claims, wherein said 1^{st} product stream comprising the concentrated slurry is withdrawn from the slurry reactor, whereby the concentration of solids at the outlet is higher than the concentration of solids in the slurry reactor.

9. The process according to any one of claims 3 to 7, wherein the solids concentration in the first secondary product stream (2a) is higher than the solids concentration in the second secondary product stream (2b).

10. The process according to any one of the preceding claims, wherein after step (c) of claim 1 said 1^{st} product stream comprising said concentrated slurry is transferred to a flash unit in order to remove essentially all of the remaining fluid phase and to provide a modified product stream containing a suspension of polymer solids and gases, and said modified product stream is polymerized in said first gas phase reactor (GPR1).

11. A polymerization system for producing alpha-olefin polymers in the presence of a polymerization catalyst in a continuously operated multistage polymerisation sequence, comprising:
(A) a slurry reactor for polymerizing an alpha-olefin monomer and optionally one or more alpha-olefin co-monomers in the presence of a hydrocarbon diluent or liquid monomer in a slurry phase to obtain an alpha-olefin polymer, the slurry phase having a first solids concentration, the slurry reactor having at least one outlet allowing continuous withdrawal of a polymer slurry,
(B) a separation vessel for concentrating at least a part of the polymer slurry withdrawn from the slurry reactor by removing a part of the fluid phase to provide a 1^{st} product stream comprising a concentrated slurry having a second solids concentration, which is higher than the first solids concentration, and a 2^{nd} product stream mainly comprising the fluid phase, the separation vessel having an overflow and an underflow,
(C) a first gas phase reactor (GPR1) arranged downstream of the slurry reactor for polymerizing the 1^{st} product stream in the presence of alpha-olefin monomers and optionally one or more alpha-olefin co-monomers, thus obtaining a 1^{st} alpha-olefin product stream exiting said first gas phase reactor (GPR1), and
(D) a second gas phase reactor (GPR2) arranged downstream of the slurry reactor and arranged in parallel to the first gas phase reactor (GPR1) for polymerizing a 3^{rd} product stream, withdrawn from the slurry reactor and comprising a concentrated slurry, in the presence of alpha-olefin monomers and optionally one or more alpha-olefin co-monomers, thus obtaining a 2^{nd} alpha-olefin product stream exiting said second gas phase reactor (GPR2).

12. The polymerization system according to claim 11, wherein said 3^{rd} product stream comprises a concentrated slurry having a solids concentration lower than the second solids concentration of said 1^{st} product stream.

13. The polymerization system according to claim 11, further comprising:
(G) respective transfer lines for splitting the 1^{st} product stream withdrawn from the slurry reactor into a first secondary product stream (2a) and a second secondary product stream (2b), the 1^{st} product stream comprising said concentrated slurry, wherein
said first secondary product stream (2a) is polymerized in the presence of alpha-olefin monomers and optionally one or more alpha-olefin co-monomers in said first gas phase reactor (GPR1), arranged downstream of said slurry reactor to obtain said 1^{st} alpha-olefin product stream, and
said second secondary product stream (2b) is polymerized in the presence of alpha-olefin monomers and optionally one or more alpha-olefin co-monomers in said second gas phase reactor (GPR2) arranged downstream of said slurry reactor, and arranged in parallel to the first gas phase reactor (GPR1) to obtain said 2^{nd} alpha-olefin product stream.

14. The polymerization system according to claim 11, wherein said separation vessel is a hydrocyclone.

15. The polymerization system according to any one of claims 11 to 14, further comprising
(H) respective transfer lines combining said 1^{st} alpha-olefin product stream exiting said first gas phase reactor (GPR1) and said 2^{nd} alpha-olefin product stream exiting said 2^{nd} gas phase reactor (GPR2).

16. The polymerization system according to any one of claims 11 to 15, further comprising
(I) a flash unit provided downstream of the slurry reactor and upstream of one or both of said first and second gas phase reactors for removing from said 1^{st} product stream and/or 3^{rd} product stream essentially all of the remaining fluid phase and to provide a modified product stream containing a suspension of polymer solids and gases which is transferred to at least one of said first and second gas phase reactors.
